# EUROPEAN PATENT SPECIFICATION

(11) **EP 4 785 116 B1**
(45) Date of publication and mention of the grant of the patent: **14.10.2026**
(21) Application number: 24836776.5
(22) Date of filing: 20.12.2024
(51) Int. Cl.: G06F 3/01, G06T 7/60, G06T 7/73, G06V 40/18, G06T 7/246

(54) **METHOD FOR EYE/GAZE-TRACKING DEVICES**
VERFAHREN FÜR AUGEN-/BLICKVERFOLGUNGSVORRICHTUNGEN
MÉTHODE POUR DISPOSITIFS DE SUIVI OCULAIRE/SUIVI DU REGARD

(43) Date of publication of application: 05.08.2026
(73) Proprietor: Viewpointsystem GmbH, 1010 Wien (AT)
(72) Inventor: SCHMIED, Roman, 1020 Wien (AT); LINSENMAIER, Frank, 71384 Weinstadt (DE); BERGER, Nils, 9494 Schaan (LI)
(74) Representative: Schardmüller Gall-Schuhmann Patentanwälte OG
(86) International application number: PCT/EP2024/088045
(87) International publication number: WO 2026/130727

(56) References cited:
- US-A1- 2016 206 196
- US-A1- 2021 085 174

## Description

### Technical Field

The present invention discloses a method for eye/gaze-tracking devices, particularly suitable for head-mounted eye/gaze-tracking devices. Head-mounted eye/gaze-tracking devices are able to detect eye positions and gaze direction of the user (wearing the device) in real-time. Said devices are used for scientific purposes and in the industry for remote maintenance and training.

Head-mounted eye/gaze-tracking devices usually comprise a sensor, which is oriented onto the eye of the spectacle's wearer, being able to detect the pupil of the user, to ascertain the coordinates of the pupil in the space. Gaze-tracking devices further comprise a front camera that is able to capture the scenario in front of the user. In this case, the device can determine the gaze direction of the user's eyes which can be displayed on a correspondent computer device to a second user, even remotely connected via the internet.

### Prior Art

US2016/0206196 discloses gaze-tracking spectacles comprising two sensors, in particular eye cameras arranged in the nose frame of the glasses and a field of view camera in the middle of the glasses, showing the front scenery of the user.

The field of view camera is provided to record a field of view, video including individual and successive field of view images. The recordings of the two eye acquisition cameras and at least one field of view camera can thus be entered in correlation with the field of view video of the respective gaze point.

The European Patent EP4281829 describes an advanced eye-tracking kit designed specifically for integration with regular eyeglasses. This invention targets the field of wearable technology, specifically enhancing user interaction and experience by monitoring eye movement and gaze direction. The design outlines a modular system that includes an eye-tracking component fitted onto or embedded within the frame of eyeglasses. The system consists of multiple elements such as sensors, processors, and communication units, optimized for minimal size to ensure comfort and usability for extended wear.

One of the key features highlighted in the patent is the emphasis on non-intrusive user experience, whereby the eye-tracking kit can be seamlessly attached to conventional eyewear without requiring extensive modifications. This adaptability aims to make eye-tracking more accessible and practical for various applications, including augmented reality (AR), virtual reality (VR), and user interface control systems.

However, EP4281829 is focused on mechanical form-factor aspects of the eye-tracking kit, not on reducing its power consumption, improving response times, or saving bandwidth for the unit itself.

Further augmented/virtual/mixed reality glasses are known, that have a very minimal spectacles frame, including a horizontal upper part provided with an element constituting the nose frame, in order to have the device placed stably and supported by the nose of the user.

In general, the typical software pipeline of eye-tracking head-mounted devices begins with the "representation capture" phase, where eye sensors take eye representation data which may be in the form of images of the user's eyes. The representation may be an image, or an output of electrooculography (EOG) sensors, Dynamic Vision Sensors (DVS), or Micro-Electro-Mechanical Systems (MEMS) sensors. These representations are then analyzed in the "eye feature detection" stage, where the software identifies key features of the eyes, such as the pupil, iris, and any reflections on the cornea. Once these features are detected, the software moves to the "gaze estimation" phase, where it calculates the direction of the user's gaze based on the eye features and their positions in the correspondent representation and the position of the eye sensors relative to the eyes. Finally, in the "output interpretation" phase, the software interprets the calculated gaze direction to display it to a remotely connected computer device and/or to interact with the computer device itself, such as by moving a cursor or selecting objects on a display.

One important step to mention is the "calibration". The user's eyes and facial features are unique. Calibration accounts for these individual differences by adjusting the system to each user's specific eye anatomy and eye-tracking device position on the user's head. Factors such as eye shape, the distance between the eyes, and the distance of the eyes from the eye sensors can vary significantly between users. Calibration helps the system adapt to these variations to improve accuracy and ensure that the gaze estimation is tailored to the user's unique characteristics.

However, at several points within this pipeline, the software's ability to accurately predict the user's gaze can be compromised, leading to a lack of robustness. For instance, during the image capture phase, if the cameras fail to capture clear images due to poor lighting, reflections, or interference from the user's eyewear, the entire process may be disrupted, resulting in inaccurate gaze predictions. In the eye feature detection stage, the software may struggle to consistently identify the correct eye features due to individual variations in eye shape, pupil size, or frequent blinking. This inconsistency can lead to errors in later stages. Regarding gaze estimation, the mathematical models used might not fully account for rapid or subtle eye movements, which can lead to inaccuracies in predicting where the user is looking. The calibration step is particularly critical; if the device is not properly calibrated or shifts on the user's head, the calculated gaze direction may not align with the user's actual line of sight, causing significant errors in interaction. Lastly, any delays or errors in the output interpretation phase could result in a mismatch between the user's intended actions and the device's response, further affecting the accuracy and reliability of the system.

In summary, each step in the software pipeline plays a crucial role in ensuring accurate gaze prediction, and failures or weaknesses at any stage can lead to a lack of robustness in the overall performance of the eye-tracking system.

In this respect, US 2020/0195915 discloses a method for detecting relocation (or repositioning) of a head-mounted device relative to a user's head. The cameras for gaze tracking are also employed for detecting relocation of the head-mounted device relative to the user's head. The relocation is computed according to the difference measured between one first estimated position of the center of the eye and the second estimated position of the same parameter, being in turn calculated as the intersection of the optical axis at two different time instances. However, the disclosed method does not take into account inaccurate measures which may occur due to eye features not being detected at all, due to environmental conditions, user blinking, abrupt slippage, or other causes for a prolonged period of time, leading to a crash of the entire pipeline.

Further, US 2021/0085174 A1 discloses eyeball structure estimation. However, it at least does not disclose a method for dynamically updating the estimate of the three-dimensional position of the eyeball center when, in use, the user's eye eyeball center moves over time in relation to an eye/gaze-tracking device, shaped compatible with the nose of a wearer, and which is configured to execute an iterative implementation of the Bayesian prediction and correction model for dynamically updating the estimate of the three-dimensional position of the eyeball center.

### Purposes of the Invention

One objective of the present invention is obtaining a method for eye/gaze tracking devices to be stable and robust enough even when an abrupt slippage or any unexpected movement of the device over the user's nose of the eye/gaze tracking device occurs.

Another object of the present invention is to develop a method for eye/gaze tracking devices that enables continuous monitoring of user gaze, unaffected by prolonged staring periods or other forms of sustained visual attention.

A further object of this invention is to improve the overall performance and reliability of eye/gaze-tracking systems by minimizing the impact of inaccurate measurements on subsequent processing steps.

Yet another object of the present invention is to provide a method for eye/gaze tracking devices that can accurately detect subtle changes in user gaze direction, such as those caused by slight head movements or adjustments.

A further objective of the present invention is to provide a robust method for eye/gaze devices in general, easily adaptable to different architecture and eye-tracking systems.

Another objective of the present invention is to provide an eye/gaze tracking method outputting a more realistic user's gaze behavior with respect to known eye-tracking devices.

A further objective of the present invention is to provide a rigorous method of merging measurements from different sensors observing the same eye.

### Summary of the Invention

Hereinafter are summarized some technical aspects of the present inventions which enable some of the most important purposes to be achieved.

The present invention relates to a method for determining and dynamically updating the estimate of the three-dimensional position of the eyeball center with respect to a gaze/eye-tracking system. The method updates the eyeball center calculation over time according to the iterative Bayesian inference as a statistical method, based on measurements of the eyeball center. By implementing such a method, the eye/gaze-tracking devices are more stable and robust, even when an abrupt slippage or any unexpected movement of the device over the user's nose of the eye/gaze tracking device occurs.

According to a second aspect, this invention relates to a method further comprising the step of adding to the prior covariance matrix a noise covariance matrix based on a diffusion process.

By introducing diffusion noise, the model can adapt more flexibly to new data.

According to a third aspect, this invention relates to a method further comprising: adjusting the pupil representation data with the result of a cornea refraction compensation calculation, in order to improve user's gaze estimation accuracy.

According to a fourth aspect, this invention relates to a method for eye/gaze-tracking devices more robust and accurate to characterize further eye movements and eye geometry parameters.

According to further aspects, this invention relates to further an eye/gaze tracking unit and a head-mounted devices including the eye/gaze-tracking unit implementing the method according to the invention, and further computer devices including a computer-readable storage medium comprising computer-executable instructions which, when executed, configure a processing unit to perform the method claimed in the present specification.

### Brief Description of Drawings

The structural and functional features of the present invention and its advantages with respect to the known prior art, will become even clearer from the underlying claims, and in particular from an examination of the following description, made with reference to the attached figures which show a preferred but not limited schematic embodiment of the invented method, system, device, in which:
Figure 1 illustrates a first preferred embodiment of the method according to the present invention;
Figures 2, 3 and 4 illustrate respectively a second, a third and a fourth preferred embodiment of the method according to the present invention;
Figure 5 illustrates a head-mounted device 2 including the eye/gaze-tracking unit 1 (not visible), a computer device, the eye/gaze-tracking unit 1 implementing the method according to the present invention; and
Figures 6, 7, 8, 9 illustrate charts of a simulation of the method according to the present invention.

### Modes for Carrying out the Invention

The present invention relates to a method for determining and dynamically updating the estimate of the three-dimensional position of the eyeball center with respect to an eye/gaze-tracking unit and/or eye/gaze-tracking device and/or head-mounted computer device.

The specifications "right" or "left" or "high" or "low" or "front" or "back" relate to the intended manner of wearing eyeglasses and the eye tracking module by a human being.

Eye tracking technology, particularly when integrated into head-mounted devices, plays an essential role in understanding and analyzing a user's visual attention and interaction with their environment. Eye and gaze tracking systems are designed to detect, record, and analyze the movement, position, and focus of a user's eyes. Such technology provides valuable insights across numerous fields, including medical diagnostics, human-computer interaction, virtual and augmented reality, behavioral studies, and marketing research. Eye tracking can offer precision in determining where a user is looking, how their gaze shifts, and the duration of visual focus, making it instrumental in both research and commercial applications.

Head-mounted eye and gaze-tracking devices, in particular, offer distinct advantages by allowing for real-time monitoring of a user's gaze in dynamic environments. These systems may comprise one or more eye sensors (e.g., cameras) that capture high-resolution images of the user's eyes. The data obtained is processed using algorithms to determine the direction and point of gaze. Such systems may often include additional components, such as infrared (IR) light sources to enhance pupil detection, processing units for image and data analysis, and communication modules to interface with external devices. In certain embodiments, the head-mounted device may also incorporate display technologies, such as virtual reality (VR) or augmented reality (AR) systems, enabling the device to provide an immersive and interactive user experience while concurrently tracking the user's visual engagement.

The accurate estimation of a user's gaze direction from the representation of the user's eye is a critical function in head-mounted eye/gaze-tracking devices. The effectiveness and accuracy of these devices depend significantly on the algorithmic processes employed to interpret and translate eye movement data into actionable gaze information. These processes involve the application of advanced image processing techniques and mathematical models designed to capture, analyze, and compute the user's point of gaze in real-time.

In a camera-based eye/gaze-tracking system, the process typically begins with the acquisition of high-resolution images or other kinds of suitable representation or video data of the user's eye, captured through one or more imaging sensors positioned within the head-mounted device. The critical algorithmic steps for gaze estimation on camera-based systems can be broadly categorized as follows:
1. Eye Detection and Localization: the first step involves detecting the presence and position of the user's eye within the captured image data. This often includes segmenting the eye from the surrounding facial features and identifying key anatomical markers, such as the iris, pupil, and corneal reflection. Techniques such as edge detection, gradient-based algorithms, or machine learning-based classifiers may be employed to enhance the accuracy of this step.
2. Pupil Detection and Tracking: once the eye is localized, the next step is to identify and track the position of the pupil, which is typically used as a primary indicator of the user's gaze direction. This is achieved using algorithms designed to detect the dark region of the pupil in contrast to the surrounding iris and sclera. Techniques such as thresholding or deep learning methods may be used to improve detection robustness under varying lighting conditions or head movements.
3. Corneal Reflection Analysis: to improve gaze estimation accuracy, many systems utilize infrared (IR) light sources to create corneal reflections (also known as "glints") on the surface of the user's eye. These reflections serve to aid in calculating the relative position of the pupil. Algorithms are employed to detect and track the glints and compute their geometric relationship with the pupil.
4. Eye Model Fitting: once key features of the eye are identified, the next step involves fitting a geometric or mathematical model of the eye. This model accounts for the curvature of the cornea and the position of the pupil, enabling the estimation of the user's eye orientation. Common approaches include geometric modelling of the eye as a sphere or ellipsoid, or leveraging ray-tracing algorithms to simulate the path of light entering the eye.
5. Gaze Mapping and Calibration: the final critical step is the translation of the eye orientation into gaze coordinates. This involves mapping the detected eye position and orientation to a corresponding point in space, such as a display screen or virtual environment. Calibration algorithms are employed to correct for individual variations in eye anatomy and head-mounted device alignment.

These algorithmic steps, when executed in sequence, allow for the accurate estimation of a user's gaze based on the representation of their eye. By employing advanced computational techniques to track eye features and model eye movements, the system can continuously estimate the user's gaze direction, enabling interactive applications in virtual reality, augmented reality, and other gaze-based interfaces.

The present invention provides a novel approach for predicting gaze-related parameters by updating the eyeball position, in particular its eyeball center over time, providing more realistic predictions.

In addition to its technical merits, the present invention has significant implications for various applications, including augmented reality (AR) and virtual reality (VR). By enabling accurate prediction of gaze-related parameters, this technology can improve user experience, enhance interaction capabilities, and expand the scope of immersive experiences.

The method according to the present invention employs iterative Bayesian inference. It starts with the initial likelihood distribution of the performance model parameters as the prior distribution and, using newly observed data, determines the corresponding likelihood for the parameters.

By incorporating this prior knowledge into the estimation process, the method can provide more accurate estimates of the 3D position of the eyeball center. This may be achieved through the use of image processing techniques to detect the user's pupil in camera-based eye/gaze-tracking systems. Then an eyeball center calculation algorithm is performed, aiming to determine the 3D pupil circle from the image captured at a determined time instance.

The technical advantages of this method include improved accuracy, real-time tracking, and flexibility and they are achieved using an iterative implementation of the Bayesian prediction and correction model.

Bayesian statistics is a probabilistic framework for statistical inference that relies on Bayes' theorem to update beliefs about unknown parameters or hypotheses in light of observed data. It contrasts with frequentist approaches by interpreting probability as a degree of belief, rather than as a long-run frequency of events. Central to Bayesian methods are the prior distribution, which encapsulates initial knowledge or assumptions about the parameter, and the posterior distribution, which combines this prior knowledge with the evidence provided by the data via the likelihood function. The posterior distribution serves as the updated representation of uncertainty regarding the parameter.

In a preferred embodiment, the present invention relates to a method for determining and dynamically updating the estimate of the three-dimensional position of the eyeball center of a user with respect to an eye/gaze-tracking device 1, 2 shaped compatible with the nose of a wearer, said eye/gaze-tracking device 1, 2 being an eye/gaze-tracking unit 1 or a head-mounted computer device including the eye/gaze tracking unit 1. Said eye/gaze-tracking device 1, 2 includes eye sensors 10 and a processing circuitry configured to receive as input pupil representation data from the eye sensors 10 when, in use, the user's eye eyeball center moves over time, said method for dynamically updating the estimate of the three-dimensional position of the eyeball center configured to execute an iterative implementation of the Bayesian prediction and correction model.

The Bayesian framework provides the essential tool for combining measurements (here, pupil data) at different time instances into an indirect model (not directly observable), i.e. the eyeball center coordinates, that is compatible with the provided measurements.

The Bayesian framework also provides a straightforward way to track the influence of measurement uncertainties on the inferred quantities (here, the eyeball center estimate). Every measurement provides a likelihood function that can be well-localized for a precise measurement or diffuse for an imprecise measurement. The Bayesian framework then provides the optimal way of combining precise with diffuse knowledge to refine the estimates of the inferred quantities.

In another possible solution, compatible with all possible variations described in the present specification, the iterative implementation of the Bayesian prediction and correction model implemented by the method in the present invention is a Kalman filter.

The Kalman filter is a practical implementation of the Bayesian filtering framework, specifically designed for systems that evolve over time and are observed through measurements contaminated by noise. It addresses the challenge of estimating the hidden state of a dynamic system by leveraging the mathematical structure of Gaussian distributions. The Kalman filter simplifies the Bayesian updating process, making it computationally efficient and analytically tractable.

At its core, the Kalman filter operates by combining prior knowledge about the system's state with new noisy observations using Bayes' theorem. The Gaussian assumptions ensure that the prior likelihood, and posterior distributions remain Gaussian at every step, allowing the filter to update the state estimate and its uncertainty using closed-form equations. This makes the Kalman filter an elegant and powerful tool for state estimation, firmly rooted in Bayesian principles of incorporating evidence to refine probabilistic beliefs.

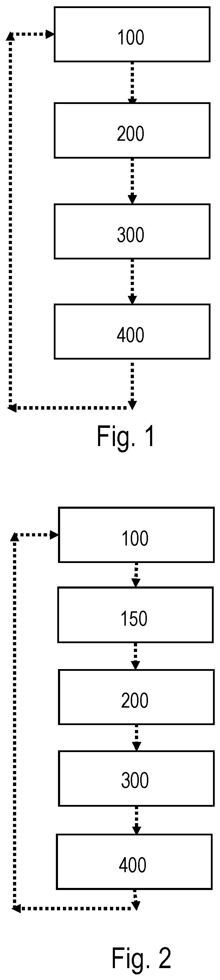

In a further possible embodiment of the present invented method, compatible with all possible variations described in the present specification, the iterative implementation of the Bayesian prediction and correction model comprises the following steps, where the eyeball center is characterized by an EyeBall Center vector, from now on EBC vector, including the eyeball center coordinates according to Cartesian reference system (x, y, z) and its correspondent covariance matrix (Fig. 1):
- 100 by performing eyeball center calculation algorithm based on a likelihood estimation function, estimating a prior likelihood function of the eyeball center of the user, represented by a prior EBC vector and its correspondent prior covariance matrix at time instance t-1
- 200 by using the processing circuitry, receiving as input pupil representation data from eye sensor 10 and performing eyeball center calculation algorithm on said pupil representation data, inferring a likelihood function of the eyeball center of the user, represented by an inferred EBC vector and its correspondent inferred covariance matrix at time instance t;
- 300 estimating a posterior likelihood function of the eyeball center of the user, represented by a posterior EBC vector at time instance t and its correspondent posterior t-covariance matrix at time instance t, by multiplying the prior likelihood function by the inferred likelihood function of the eyeball center of the user;
- 400 Setting the posterior EBC vector AND the corresponding posterior covariance matrix calculated in the previous step, into respectively the new prior EBC vector and the new prior covariance matrix, representing the new prior likelihood function.

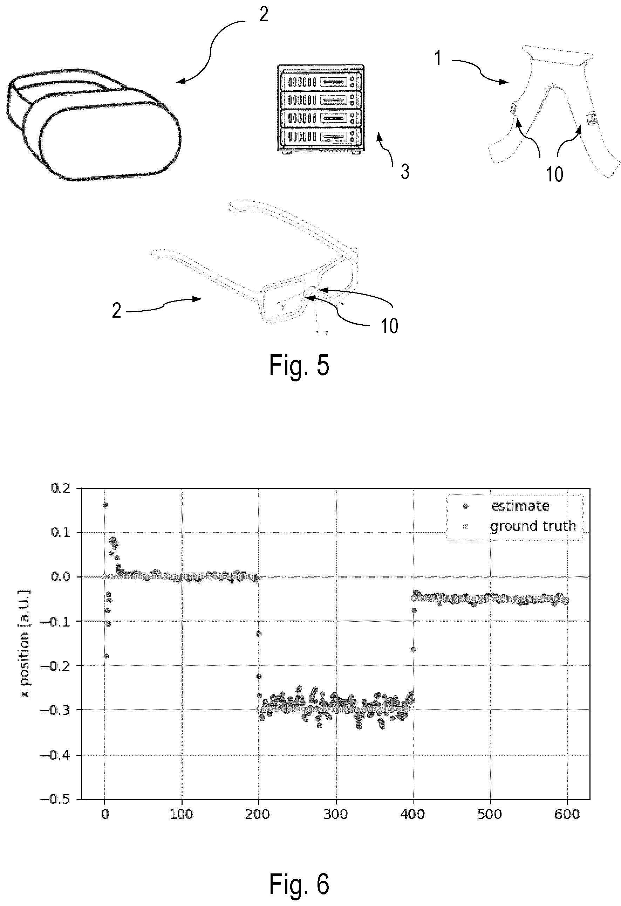

The benefits of iterating the implementation of the Bayesian prediction and correction model, according to the embodiments disclosed in the present invention are clearly visible in Figures 6 to 9.

The method is iteratively implemented over time t, repeatedly as a function of the integer time step t, which refers to multiples of a time unit that determines the update interval of the method.

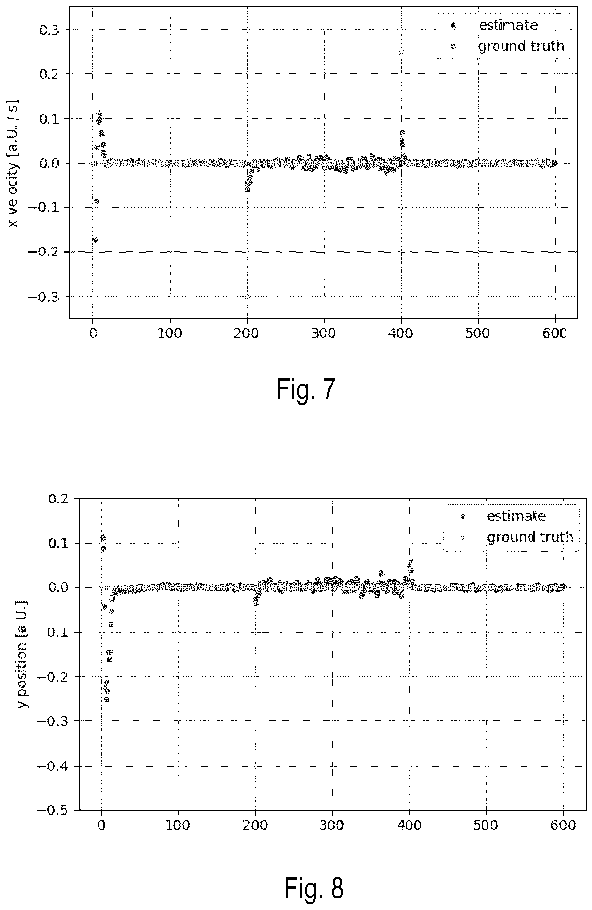

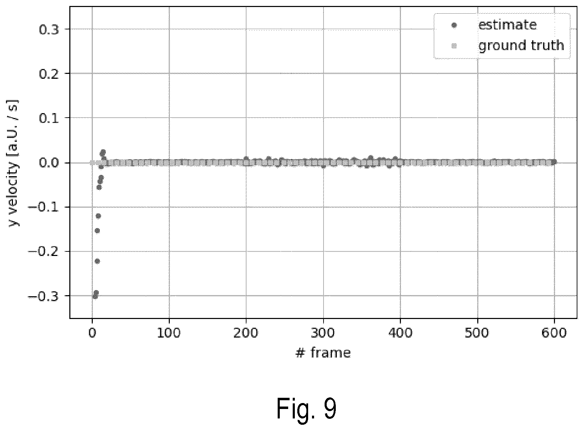

These figures illustrate a simulated slippage of the eye/gaze-tracking device 1, 2 along the x-axis at frame n. 200 and a corresponding correct replacement of the device on the user's nose at frame 400. The eye/gaze-tracking device position along the y-axis is unaffected by the simulated slippage (please see Fig. 8, 9). The light grey points are simulated ground truth data. The black data represent the response of the invented model, tracking the abrupt slippage along the x-axis (please see Fig. 6, 7).

According to Figs. 6 and 7, after a short initialization period, the model accurately tracks position and velocity. At frame 200, when the slippage in X is simulated; the model recovers accurate X position prediction within a few frames. Similarly, the correction at frame 400 is recovered quickly.

With the wording "eyeball center calculation algorithm", this disclosure refers to any eye/gaze tracking algorithms, using the eyeball center coordinates to estimate the gaze direction of the user.

One possible group of these methods are 3D model-based methods.

These methods rely on a geometrical model of the human eye to determine key features such as the corneal center, the optical axis, and the visual axis. By utilizing these elements, they estimate gaze coordinates as the intersection points where the visual axis meets the observed scene. This approach provides a structured framework for understanding gaze direction based on the eye's anatomy and its relationship with the surrounding environment.

In another possible embodiment, compatible with all possible variations described in the present specification, the method may simulate uncertainty in model parameters by adding noise according to a diffusion process.

In Bayesian analysis, the posterior distribution encapsulates updated knowledge about the parameters of a model after observing data. However, this posterior itself may contain inherent uncertainty, reflecting ambiguity due to limited data, noise, or model approximations.

This uncertainty may be addressed using a diffusive noise model, to introduce a controlled randomness that reflects our uncertainty in all parameter dimensions. This ensures that no single parameter or direction is disproportionately affected, preserving the symmetry of uncertainty when we lack specific directional biases in our knowledge. Adding noise, being proportional to the elapsed time between each iteration over time instance t (step 150, Fig. 2), simulates this growth of uncertainty, effectively broadening the prior distribution and enabling the model to account for potential deviations in the parameters or the system.

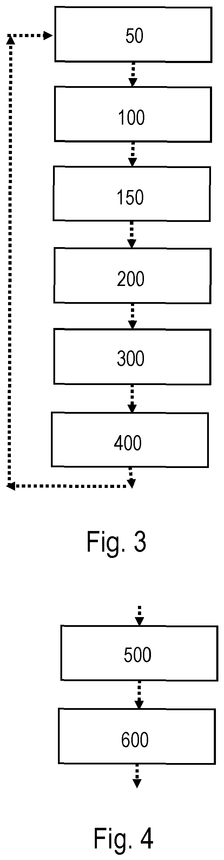

In a further possible embodiment, compatible with all possible variations described in the present specification, according to the present invention, the following step may be performed before step 100 (Fig. 3):
- 50 Adjusting the pupil representation data with the result of a corneal refraction compensation calculation.

The eye/gaze tracking unit 1 implementing the method according to the present invention, is provided with eye sensors 10 and a processing circuitry configured to receive as input pupil representation data from the eye sensors 10 when in use. Adjusting the pupil representation data by cornea refraction compensation calculation improves the accuracy of user's gaze estimation.

A convergence criterion may also be implemented in an embodiment, in a further embodiment compatible with all possible variations described in the present specification. A convergence criterion refers to subsets that determine the convergence of the gaze estimation algorithm based on specific conditions.

The convergence criterion according to one possible embodiment of the present invention, may comprise the following steps (Fig. 4):
- 500 determining the largest eigenvalue of the posterior covariance matrix at time instance t related to a correspondent EBC vector,
- 600 if the largest eigenvalue is larger than the square of a predetermined parameter proportional to eyeball radius, then said correspondent EBC vector is not used to determine the gaze direction of the user.

In order to improve the robustness of abrupt slippage/movements of the eye/gaze tracking unit 1 over the user's nose, in one possible embodiment compatible with all possible variations described in the present specification, the EBC vector includes also the velocity of the eyeball center along the three Cartesian axes and the 6-dimensional covariance matrix includes also covariance values of the three-dimensional velocity vector of the eyeball center and covariances between center position and velocity.

Moreover, the three-dimensional position of the eyeball center estimated by the method according to all possible embodiments described in the present specification may be used to further estimate the user's gaze direction and/or user's eye geometry parameters, and/or pupil size data, and/or blink state, and/or vergence angle and/or eye movements as smooth pursuit, fixation, vestibulo-ocular locking.

The present invention furthermore relates to a computer-readable storage medium comprising computer-executable instructions which, when executed, configure a processing unit to perform the method according to all its possible variants described in the present specification.

In addition, the present invention furthermore relates to a continuous integration server 3 (Fig. 5) comprising the computer-readable storage medium which, when executed, configure a processing unit to perform the method according to all its possible variants described in the present specification.

Additionally, the invention furthermore relates to an eye/gaze-tracking unit 1 (Fig. 5) shaped for being integrated into a wearable U-shaped nose bridge portion compatible with the nose of a wearer, comprising eye sensors and a processing unit, a computer-readable storage medium coupled to the processing unit said computer-readable storage medium having stored thereon computer-executable instructions which, when executed, configure the processing unit to perform a method for determining and dynamically updating the estimate of the three-dimensional position of the eyeball center of a user wearing the eye/gaze-tracking unit 1, according to all its possible variants described in the present specification.

The present invention furthermore relates to a method wherein the user's eye representation data from eye sensors 10 may be processed by a machine learning hardware accelerator, to improve the robustness of the user's gaze estimation. **In** addition, the present invention furthermore relates to a head-mounted computer device 2 (Fig. 5) comprising an eye/gaze-tracking unit 1, implementing the method according to all its possible variants described in the present specification.

Finally, the present invention furthermore relates to a head-mounted device 2 (Fig. 5) comprising more than two eye sensors 10. For example, data from two cameras pointed at the same eye (and seeing it from different perspectives) with associated quantifiers of data quality are merged/fused into a unifying description that is consistent with both data streams. In this way, better accuracy and robustness can be achieved, due to the redundancy and complementarity of the data streams. Other types of sensors, such as light detectors, electric field detectors, can be implemented in the head-mounted device 2, their outputs may be processed according to the method and all possible variations disclosed in the present specification.

## Claims

1. A method for determining and dynamically updating the estimate of the three-dimensional position of the eyeball center of a user with respect to an eye/gaze-tracking device (1, 2) shaped compatible with the nose of a wearer, said eye/gaze-tracking device (1, 2) including eye sensors (10) and a processing circuitry configured to receive as input pupil representation data from the eye sensors (10) when, in use, the user's eye eyeball center moves over time in relation to said eye/gaze-tracking device (1, 2), said method for dynamically updating the estimate of the three-dimensional position of the eyeball center configured to execute an iterative implementation of the Bayesian prediction and correction model.

2. The method according to claim 1 wherein iterative implementation of the Bayesian prediction and correction model is a Kalman filter.

3. The method according to claim 1 or 2 comprises the following steps, all performed using the processing circuitry:
- 100 by performing eyeball center calculation algorithm based on a likelihood estimation function, estimating a prior likelihood function of the eyeball center of the user, represented by a prior eyeball center vector and its correspondent prior covariance matrix at a t-1 time instance;
- 200 by using the processing circuitry, receiving as input pupil representation data from the eye sensor (10) and performing eyeball center calculation algorithm on said pupil representation data, inferring a likelihood function of the eyeball center of the user, represented by an inferred eyeball center vector and its correspondent inferred covariance matrix at a time instance t;
- 300 estimating a posterior likelihood function of the eyeball center of the user, represented by a posterior t-eyeball center vector and its correspondent posterior t-covariance matrix at a time instance t, by multiplying the prior likelihood function by the inferred likelihood function of the eyeball center of the user;
- 400 Setting the posterior eyeball center vector AND the corresponding posterior covariance matrix calculated in the previous step, into respectively the new prior eyeball center vector and the new prior covariance matrix, representing the new prior likelihood function.

4. The method according to any of the previous claims comprising:
- performing the steps of claim 3 repeatedly as a function of an integer time step t.

5. The method according to any of the previous claims comprising the following step which is performed before calculating the posterior eyeball center vector and its correspondent posterior covariance matrix at the time instance t, including:
- 150 adding to the prior covariance matrix, using the processing circuitry, a noise covariance matrix based on a diffusion process proportional to the elapsed time between each iteration of the method according to the previous claims; and
- performing the steps of claim 3 repeatedly as a function of an integer time step t.

6. The method according to claim 3 and any of the previous claims comprising the following step which is performed before step 100:
- 50 Adjusting the pupil representation data with the result of a cornea refraction compensation calculation.

7. The method according to any of the preceding claims, further comprises a convergence criterion.

8. The method according to any claim 7, wherein the convergence criterion comprises the following steps:
- 500 determining the largest eigenvalue of the posterior covariance matrix at time instance t related to a correspondent eyeball center vector,
- 600 if the largest eigenvalue is larger than the square of a predetermined parameter proportional to eyeball radius, then said correspondent eyeball center vector is not used to determine the gaze direction of the user.

9. The method according to any of the preceding claims from 3 to 8, wherein the eyeball center vector includes also the velocity of the eyeball center along the three Cartesian axes and the 6-dimensional covariance matrix includes also covariance values of the three-dimensional velocity vector of the eyeball center and covariances between center position and velocity.

10. The method according to any of the preceding claims wherein the three-dimensional position of the eyeball center is used to further estimate the user's gaze direction and/or user's eye geometry parameters, and/or pupil size data, and/or blink state, and/or vergence angle and/or eye movements as smooth pursuit, fixation, vestibulo-ocular locking.

11. A computer-readable storage medium comprising computer-executable instructions which, when executed, configure a processing unit to perform the method of any of claims 1 to 10.

12. A continuous integration server (3) comprising the computer-readable storage medium according to claim 11.

13. An eye/gaze-tracking unit (1) shaped for being integrated into a wearable U-shaped nose bridge portion compatible with the nose of a wearer, comprising eye sensors (10) and a processing unit, a computer-readable storage medium coupled to the processing unit said computer-readable storage medium having stored thereon computer-executable instructions which, when executed, configure the processing unit to perform a method for determining and dynamically updating the estimate of the three-dimensional position of the eyeball center of a user wearing the eye/gaze-tracking unit (1), according to the method of any of claims 1 to 10.

14. The eye/gaze-tracking unit (1) according to claim 13 includes a processing unit having a machine learning hardware accelerator support.

15. A head-mounted computer device (2) comprising an eye/gaze-tracking unit (1) according to claims 13 or 14.

16. The head-mounted computer device (2) according to claim 15 comprises further eye sensors configured to send data to the processing unit to perform a method for determining and dynamically updating the estimate of the three-dimensional position of the eyeball center of a user wearing the eye/gaze-tracking unit (1), according to the method of any of claims 1 to 10.

## Patentansprüche

1. Verfahren zur Bestimmung und dynamischen Aktualisierung der Schätzung der dreidimensionalen Position des Augapfelzentrums eines Benutzers in Bezug auf eine Augen-/Blickverfolgungsvorrichtung (1, 2), deren Form mit der Nase eines Trägers kompatibel ist, wobei die Augen-/Blickverfolgungsvorrichtung (1, 2) Augensensoren (10) und eine Verarbeitungsschaltung umfasst, die dazu eingerichtet ist, Pupillendarstellungsdaten von den Augensensoren (10) als Eingabe zu empfangen, wenn sich während der Benutzung das Augapfelzentrum des Auges des Benutzers im Laufe der Zeit relativ zu der Augen-/Blickverfolgungsvorrichtung (1, 2) bewegt, wobei das Verfahren zur dynamischen Aktualisierung der Schätzung der dreidimensionalen Position des Augapfelzentrums dazu eingerichtet ist, eine iterative Implementierung eines Bayes'schen Vorhersage- und Korrekturmodells auszuführen.

2. Verfahren nach Anspruch 1, wobei die iterative Implementierung des Bayes'schen Vorhersage- und Korrekturmodells ein Kalman-Filter ist.

3. Verfahren nach Anspruch 1 oder 2, umfassend die folgenden Schritte, die sämtlich unter Verwendung der Verarbeitungsschaltung durchgeführt werden:
- 100 Durchführen eines Algorithmus zur Berechnung des Augapfelzentrums auf Grundlage einer Likelihood-Schätzfunktion, um eine A-priori-Likelihood-Funktion des Augapfelzentrums des Benutzers zu schätzen, dargestellt durch einen A-priori-Augapfelzentrumsvektor und die zugehörige A-priori-Kovarianzmatrix zu einem Zeitpunkt t-1;
- 200 Empfangen von Pupillendarstellungsdaten vom Augensensor (10) als Eingabe unter Verwendung der Verarbeitungsschaltung und Durchführen eines Algorithmus zur Berechnung des Augapfelzentrums auf den Pupillendarstellungsdaten, um eine Likelihood-Funktion des Augapfelzentrums des Benutzers abzuleiten, dargestellt durch einen abgeleiteten Augapfelzentrumsvektor und die zugehörige abgeleitete Kovarianzmatrix zu einem Zeitpunkt t;
- 300 Schätzen einer A-posteriori-Likelihood-Funktion des Augapfelzentrums des Benutzers, dargestellt durch einen A-posteriori-Augapfelzentrumsvektor zum Zeitpunkt t und die zugehörige A-posteriori-Kovarianzmatrix zum Zeitpunkt t, durch Multiplikation der A-priori-Likelihood-Funktion mit der abgeleiteten Likelihood-Funktion des Augapfelzentrums des Benutzers;
- 400 Setzen des im vorhergehenden Schritt berechneten A-posteriori-Augapfelzentrumsvektors und der entsprechenden A-posteriori-Kovarianzmatrix jeweils als neuen A-priori-Augapfelzentrumsvektor bzw. neue A-priori-Kovarianzmatrix, die die neue A-priori-Likelihood-Funktion darstellen.

4. Verfahren nach einem der vorhergehenden Ansprüche, umfassend:
- wiederholtes Durchführen der Schritte von Anspruch 3 als Funktion eines ganzzahligen Zeitschritts t.

5. Verfahren nach einem der vorhergehenden Ansprüche, umfassend den folgenden Schritt, der vor der Berechnung des A-posteriori-Augapfelzentrumsvektors und seiner zugehörigen A-posteriori-Kovarianzmatrix zum Zeitpunkt t durchgeführt wird:
- 150 Hinzufügen einer Rauschkovarianzmatrix zu der A-priori-Kovarianzmatrix unter Verwendung der Verarbeitungsschaltung, basierend auf einem Diffusionsprozess, der proportional zu der zwischen den einzelnen Iterationen des Verfahrens nach den vorhergehenden Ansprüchen verstrichenen Zeit ist; und
- wiederholtes Durchführen der Schritte von Anspruch 3 als Funktion eines ganzzahligen Zeitschritts t.

6. Verfahren nach Anspruch 3 und einem der vorhergehenden Ansprüche, umfassend den folgenden Schritt, der vor Schritt 100 durchgeführt wird:
- 50 Anpassen der Pupillendarstellungsdaten mit dem Ergebnis einer Berechnung zur Kompensation der Hornhautbrechung.

7. Verfahren nach einem der vorhergehenden Ansprüche, ferner umfassend ein Konvergenzkriterium.

8. Verfahren nach Anspruch 7, wobei das Konvergenzkriterium die folgenden Schritte umfasst:
- 500 Bestimmen des größten Eigenwerts der A-posteriori-Kovarianzmatrix zum Zeitpunkt t, die mit einem entsprechenden Augapfelzentrumsvektor verknüpft ist,
- 600 wenn der größte Eigenwert größer ist als das Quadrat eines vorbestimmten Parameters, der proportional zum Augapfelradius ist, dann wird der entsprechende Augapfelzentrumsvektor nicht zur Bestimmung der Blickrichtung des Benutzers verwendet.

9. Verfahren nach einem der vorhergehenden Ansprüche 3 bis 8, wobei der Augapfelzentrumsvektor zusätzlich die Geschwindigkeit des Augapfelzentrums entlang der drei kartesischen Achsen umfasst und die 6-dimensionale Kovarianzmatrix zusätzlich Kovarianzwerte des dreidimensionalen Geschwindigkeitsvektors des Augapfelzentrums sowie Kovarianzen zwischen Zentrumsposition und Geschwindigkeit umfasst.

10. Verfahren nach einem der vorhergehenden Ansprüche, wobei die dreidimensionale Position des Augapfelzentrums verwendet wird, um ferner die Blickrichtung des Benutzers und/oder Geometrieparameter des Auges des Benutzers und/oder Pupillengrößendaten und/oder den Lidschlagzustand und/oder den Vergenzwinkel und/oder Augenbewegungen wie glatte Folgebewegungen, Fixationen und vestibulo-okuläre Stabilisierung zu schätzen.

11. Computerlesbares Speichermedium, das computerausführbare Anweisungen umfasst, die, wenn sie ausgeführt werden, eine Verarbeitungseinheit dazu konfigurieren, das Verfahren nach einem der Ansprüche 1 bis 10 durchzuführen.

12. Continuous-Integration-Server (3) umfassend das computerlesbare Speichermedium nach Anspruch 11.

13. Augen-/Blickverfolgungseinheit (1), ausgebildet zur Integration in einen tragbaren U-förmigen Nasenbrückenabschnitt, der mit der Nase eines Trägers kompatibel ist, umfassend Augensensoren (10), eine Verarbeitungseinheit und ein mit der Verarbeitungseinheit gekoppeltes computerlesbares Speichermedium, wobei auf dem computerlesbaren Speichermedium computerausführbare Anweisungen gespeichert sind, die, wenn sie ausgeführt werden, die Verarbeitungseinheit dazu konfigurieren, ein Verfahren zur Bestimmung und dynamischen Aktualisierung der Schätzung der dreidimensionalen Position des Augapfelzentrums eines Benutzers, der die Augen-/Blickverfolgungseinheit (1) trägt, gemäß einem der Ansprüche 1 bis 10 durchzuführen.

14. Augen-/Blickverfolgungseinheit (1) nach Anspruch 13, die eine Verarbeitungseinheit mit Unterstützung für einen Hardwarebeschleuniger für maschinelles Lernen umfasst.

15. Am Kopf getragenes Computergerät (2), umfassend eine Augen-/Blickverfolgungseinheit (1) nach Anspruch 13 oder 14.

16. Am Kopf getragenes Computergerät (2) nach Anspruch 15, das ferner Augensensoren umfasst, die dazu eingerichtet sind, Daten an die Verarbeitungseinheit zu senden, um ein Verfahren zur Bestimmung und dynamischen Aktualisierung der Schätzung der dreidimensionalen Position des Augapfelzentrums eines Benutzers, der die Augen-/Blickverfolgungseinheit (1) trägt, gemäß einem der Ansprüche 1 bis 10 durchzuführen.

## Revendications

1. Procédé de détermination et de mise à jour dynamique de l'estimation de la position tridimensionnelle du centre du globe oculaire d'un utilisateur par rapport à un dispositif de suivi oculaire/du regard (1, 2) dont la forme est compatible avec le nez d'un porteur, ledit dispositif de suivi oculaire/du regard (1, 2) comprenant des capteurs oculaires (10) et un circuit de traitement configuré pour recevoir en entrée des données de représentation de la pupille provenant des capteurs oculaires (10) lorsque, en utilisation, le centre du globe oculaire de l'œil de l'utilisateur se déplace au cours du temps par rapport audit dispositif de suivi oculaire/du regard (1, 2), ledit procédé de mise à jour dynamique de l'estimation de la position tridimensionnelle du centre du globe oculaire étant configuré pour exécuter une mise en œuvre itérative d'un modèle bayésien de prédiction et de correction.

2. Procédé selon la revendication 1, dans lequel la mise en œuvre itérative du modèle bayésien de prédiction et de correction est un filtre de Kalman.

3. Procédé selon la revendication 1 ou 2, comprenant les étapes suivantes, toutes réalisées à l'aide du circuit de traitement :
- 100 exécuter un algorithme de calcul du centre du globe oculaire sur la base d'une fonction d'estimation de vraisemblance afin d'estimer une fonction de vraisemblance a priori du centre du globe oculaire de l'utilisateur, représentée par un vecteur du centre du globe oculaire a priori et sa matrice de covariance a priori correspondante à un instant t-1 ;
- 200 au moyen du circuit de traitement, recevoir en entrée des données de représentation de la pupille provenant du capteur oculaire (10) et exécuter un algorithme de calcul du centre du globe oculaire sur lesdites données de représentation de la pupille, afin de déduire une fonction de vraisemblance du centre du globe oculaire de l'utilisateur, représentée par un vecteur du centre du globe oculaire inféré et sa matrice de covariance inférée correspondante à un instant t ;
- 300 estimer une fonction de vraisemblance a posteriori du centre du globe oculaire de l'utilisateur, représentée par un vecteur du centre du globe oculaire a posteriori à l'instant t et sa matrice de covariance a posteriori correspondante à l'instant t, en multipliant la fonction de vraisemblance a priori par la fonction de vraisemblance inférée du centre du globe oculaire de l'utilisateur ;
- 400 définir le vecteur du centre du globe oculaire a posteriori et la matrice de covariance a posteriori correspondante calculés à l'étape précédente respectivement comme nouveau vecteur du centre du globe oculaire a priori et nouvelle matrice de covariance a priori, représentant la nouvelle fonction de vraisemblance a priori.

4. Procédé selon l'une quelconque des revendications précédentes, comprenant :
- l'exécution répétée des étapes de la revendication 3 en fonction d'un pas de temps entier t.

5. Procédé selon l'une quelconque des revendications précédentes, comprenant l'étape suivante exécutée avant le calcul du vecteur du centre du globe oculaire a posteriori et de sa matrice de covariance a posteriori correspondante à l'instant t :
- 150 ajouter à la matrice de covariance a priori, au moyen du circuit de traitement, une matrice de covariance de bruit basée sur un processus de diffusion proportionnel au temps écoulé entre chaque itération du procédé selon les revendications précédentes ; et
- exécuter de manière répétée les étapes de la revendication 3 en fonction d'un pas de temps entier t.

6. Procédé selon la revendication 3 et l'une quelconque des revendications précédentes, comprenant l'étape suivante exécutée avant l'étape 100 :
- 50 ajuster les données de représentation de la pupille à l'aide du résultat d'un calcul de compensation de la réfraction cornéenne.

7. Procédé selon l'une quelconque des revendications précédentes, comprenant en outre un critère de convergence.

8. Procédé selon la revendication 7, dans lequel le critère de convergence comprend les étapes suivantes :
- 500 déterminer la plus grande valeur propre de la matrice de covariance a posteriori à l'instant t associée à un vecteur du centre du globe oculaire correspondant ;
- 600 si la plus grande valeur propre est supérieure au carré d'un paramètre prédéterminé proportionnel au rayon du globe oculaire, alors ledit vecteur du centre du globe oculaire correspondant n'est pas utilisé pour déterminer la direction du regard de l'utilisateur.

9. Procédé selon l'une quelconque des revendications précédentes 3 à 8, dans lequel le vecteur du centre du globe oculaire comprend en outre la vitesse du centre du globe oculaire le long des trois axes cartésiens et la matrice de covariance à six dimensions comprend en outre des valeurs de covariance du vecteur vitesse tridimensionnel du centre du globe oculaire ainsi que des covariances entre la position du centre et la vitesse.

10. Procédé selon l'une quelconque des revendications précédentes, dans lequel la position tridimensionnelle du centre du globe oculaire est utilisée pour estimer en outre la direction du regard de l'utilisateur et/ou les paramètres géométriques de l'œil de l'utilisateur, et/ou des données de taille de pupille, et/ou l'état de clignement, et/ou l'angle de vergence et/ou des mouvements oculaires tels que la poursuite lisse, la fixation et le verrouillage vestibulo-oculaire.

11. Support de stockage lisible par ordinateur comprenant des instructions exécutables par ordinateur qui, lorsqu'elles sont exécutées, configurent une unité de traitement pour mettre en œuvre le procédé selon l'une quelconque des revendications 1 à 10.

12. Serveur d'intégration continue (3) comprenant le support de stockage lisible par ordinateur selon la revendication 11.

13. Unité de suivi oculaire/du regard (1) configurée pour être intégrée dans une partie de pont nasal portable en forme de U compatible avec le nez d'un porteur, comprenant des capteurs oculaires (10), une unité de traitement et un support de stockage lisible par ordinateur couplé à l'unité de traitement, ledit support de stockage lisible par ordinateur comportant des instructions exécutables par ordinateur qui, lorsqu'elles sont exécutées, configurent l'unité de traitement pour mettre en œuvre un procédé de détermination et de mise à jour dynamique de l'estimation de la position tridimensionnelle du centre du globe oculaire d'un utilisateur portant l'unité de suivi oculaire/du regard (1), conformément au procédé selon l'une quelconque des revendications 1 à 10.

14. Unité de suivi oculaire/du regard (1) selon la revendication 13, comprenant une unité de traitement dotée d'un support d'accélérateur matériel pour l'apprentissage automatique.

15. Dispositif informatique monté sur la tête (2) comprenant une unité de suivi oculaire/du regard (1) selon la revendication 13 ou 14.

16. Dispositif informatique monté sur la tête (2) selon la revendication 15, comprenant en outre des capteurs oculaires configurés pour envoyer des données à l'unité de traitement afin de mettre en œuvre un procédé de détermination et de mise à jour dynamique de l'estimation de la position tridimensionnelle du centre du globe oculaire d'un utilisateur portant l'unité de suivi oculaire/du regard (1), conformément au procédé selon l'une quelconque des revendications 1 à 10.
